# EUROPEAN PATENT APPLICATION

(11) **EP 4 040 329 A1**
(43) Date of publication of application: **10.08.2022**
(21) Application number: 21827554.3
(22) Date of filing: 17.06.2021
(51) Int. Cl.: G06F 40/284, G06F 16/35

(54) **WEATHER EARLY WARNING TEXT PROCESSING METHOD, RELATED APPARATUS AND COMPUTER PROGRAM PRODUCT**

(30) Priority: 17.12.2020 CN 202011492994
(71) Applicant: BEIJING BAIDU NETCOM SCIENCE TECHNOLOGY CO., LTD., No. 10 Shangdi 10th Street Haidian District Beijing 100085 (CN)
(72) Inventor: ZHANG, Yipeng, Beijing 100085 (CN); QIN, Duohao, Beijing 100085 (CN); LIU, Minghao, Beijing 100085 (CN)
(74) Representative: Nederlandsch Octrooibureau
(86) International application number: PCT/CN2021/100525
(87) International publication number: WO 2022/127057

(57) **Abstract**

Embodiments of the present disclosure disclose a method and apparatus for processing a weather alert text, an electronic device, a computer readable storage medium, and a computer program product, relate to the field of artificial intelligence technology such as natural language processing, cloud services, and computer vision. An implementation of the method includes: acquiring a to-be-processed weather alert text; extracting actual weather alert elements from the to-be-processed weather alert text using preset element matching templates, the element matching templates being obtained by clustering from contexts of a sample weather alert elements; and performing normalization processing on the actual weather alert elements, and combining obtained normalized alert elements in a preset order to obtain a key weather alert text. The application of this implementation may improve an accuracy of extracting weather alert elements and a generalization processing capability for various to-be-processed weather alert texts.

## Description

### CROSS-REFERENCE TO RELATED APPLICATIONS

The present application claims the priority of Chinese Patent Application No. 202011492994.5, titled "METHOD FOR PROCESSING WEATHER ALERT TEXT, RELATED APPARATUS AND COMPUTER PROGRAM PRODUCT", filed on December 17, 2020, the content of which is incorporated herein by reference in its entirety.

### TECHNICAL FIELD

The present disclosure relates to a technical field of data processing, in particular to fields of artificial intelligence technologies such as natural language processing, cloud services, and computer vision, and more particular to a method and apparatus for processing a weather alert text, an electronic device, a computer readable storage medium, and a computer program product.

### BACKGROUND

Meteorological bureaus in various areas are required to include at least 6 key weather alert elements in released weather alert information: "issuing organization", "issuing time", "alert category", "alert level", "alert time limit" and "alert area".

However, the weather alert information generated by different meteorological bureaus is often still inconsistent in description or expression.

### SUMMARY

Embodiments of the present disclosure propose a method and apparatus for processing a weather alert text, an electronic device, a computer readable storage medium, and a computer program product.

In a first aspect, a method for processing a weather alert text is provided by the embodiments of the present disclosure, the method including: acquiring a to-be-processed weather alert text; extracting actual weather alert elements from the to-be-processed weather alert text using preset element matching templates, the element matching templates being obtained by clustering from contexts of sample weather alert elements; and performing normalization processing on the actual weather alert elements, and combining obtained normalized alert elements in a preset order to obtain a key weather alert text.

In a second aspect, an apparatus for processing a weather alert text is provided by the embodiments of the present disclosure, the apparatus including: a weather alert text acquisition unit, configured to acquire a to-be-processed weather alert text; a weather alert element extraction unit, configured to extract actual weather alert elements from the to-be-processed weather alert text using preset element matching templates, the element matching templates being obtained by clustering from contexts of a sample weather alert elements; and a normalization and combination unit, configured to perform normalization processing on the actual weather alert elements, and combine obtained normalized alert elements in a preset order to obtain a key weather alert text.

In a third aspect, an electronic device is provided by the embodiments of the present disclosure, the electronic device including: one or more processors; and a storage apparatus storing one or more programs thereon, where the one or more programs, when executed by the one or more processors, cause the one or more processors to implement the method for processing a weather alert text as described in any one of embodiments of the first aspect.

In a fourth aspect, embodiments of the present disclosure provide a computer-readable medium storing a computer program thereon, where the program, when executed by a processor, implements the method for processing a weather alert text as described in any one of the embodiments of the first aspect.

In a fifth aspect, a computer program product including a computer program is provided by the embodiments of the present disclosure, the computer program, when executed by a processor, implementing the method for processing a weather alert text in any one of the embodiments of the first aspect_{∘}

The method and apparatus for processing a weather alert text, the electronic device, the computer readable storage medium, and the computer program product provided by the embodiments of the present disclosure, first acquiring a to-be-processed weather alert text; then extracting actual weather alert elements from the to-be-processed weather alert text using a preset element matching template, the element matching template being obtained by clustering from a context of a sample weather alert element; next performing normalization processing on the actual weather alert elements, and finally combining obtained normalized alert elements in a preset order to obtain a key weather alert text.

The element matching template used in the embodiments of the present disclosure is obtained by clustering the element context extracted from the sample weather alert element in advance. Each type of weather alert element may correspond to a corresponding element matching template, and using the element context as input data for clustering to combine the context as much as possible improves the accuracy of the cluster centers. The application of clustering improves the generalization of the element matching template generated based on the cluster centers, so that various to-be-processed weather alert texts can be better extracted to obtain accurate weather alert elements.

It should be understood that the content described in this section is not intended to identify key or important features of the embodiments of the present disclosure, nor is it intended to limit the scope of the present disclosure. Other features of the present disclosure will be easily understood through the following specification.

### BRIEF DESCRIPTION OF THE DRAWINGS

By reading the detailed description of nonlimiting embodiments with reference to the following accompanying drawings, other features, objects and advantages of the present disclosure will become more apparent.
Fig. 1 is an exemplary system architecture diagram to which the present disclosure may be applied;
Fig. 2 is a flowchart of a method for processing a weather alert text provided by an embodiment of the present disclosure;
Fig. 3 is a flowchart of an element matching generation method in the method for processing a weather alert text provided by an embodiment of the present disclosure;
Fig. 4 is a flowchart of another element matching generation method in the method for processing a weather alert text provided by an embodiment of the present disclosure;
Fig. 5 is a schematic flowchart of the method for processing a weather alert text in an application scenario provided by an embodiment of the present disclosure;
Fig. 6 is a schematic diagram of a detailed flow of generating an element template in Fig. 5;
Fig. 7 is a schematic diagram of a detailed flow of time normalization in Fig. 5;
Fig. 8 is a schematic diagram of a detailed flow of place-name normalization in Fig. 5;
Fig. 9 is a structural block diagram of an apparatus for processing a weather alert text provided by an embodiment of the present disclosure; and
Fig. 10 is a schematic structural diagram of an electronic device applicable for implementing the method for processing a weather alert text provided by an embodiment of the present disclosure.

### DETAILED DESCRIPTION OF EMBODIMENTS

The following describes exemplary embodiments of the present disclosure in conjunction with the accompanying drawings, which includes various details of the embodiments of the present disclosure to facilitate understanding, and they should be considered as merely exemplary. Therefore, those of ordinary skill in the art should recognize that various changes and modifications may be made to the embodiments described herein without departing from the scope and spirit of the present disclosure. Also, for clarity and conciseness, descriptions of well-known functions and structures are omitted in the following description. It should be noted that embodiments in the present disclosure and the features in embodiments may be combined with each other on a non-conflict basis.

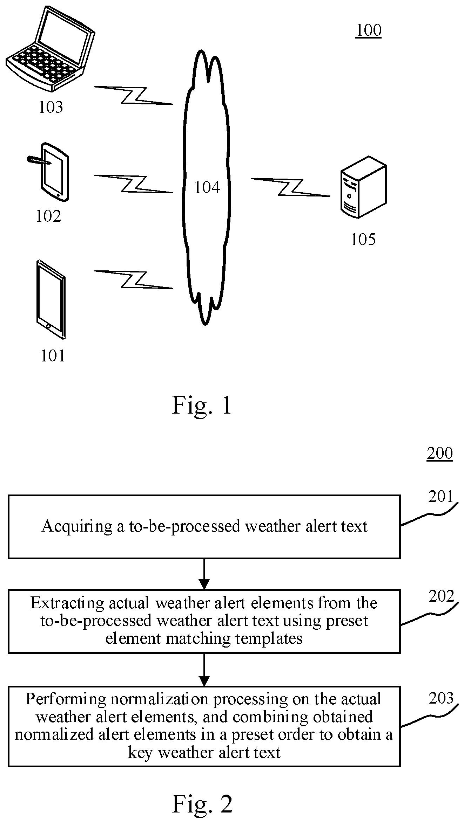

Fig. 1 shows an exemplary system architecture 100 to which embodiments of a method and apparatus for processing a weather alert text, an electronic device, a computer readable storage medium, and a computer program product of the present disclosure may be applied.

Fig. 1 shows an exemplary system architecture 100 to which a subject-verbal-object triple generation method, an apparatus, an electronic device, and a computer readable storage medium of the present disclosure may be applied.

As shown in Fig. 1, the system architecture 100 may include terminal devices 101, 102, 103, a network 104 and a server 105. The terminal devices 101, 102, and 103 are used to send a to-be-processed weather alert text to the server 105 through the network 104. The network 104 is a communication link for data communication between the terminal devices 101, 102, 103 and the server 105, and the server 105 is used to generate a key weather text based on the received to-be-processed weather alert text.

Specifically, the terminal devices 101, 102, 103 and the server 105 may be hardware or software. When the terminal devices 101, 102, and 103 are hardware, they may be various electronic devices including smart phones, tablet computers, laptop computers, and desktop computers; when the terminal devices 101, 102, and 103 are software, they may be single/multiple software/functional modules installed in the electronic devices listed above, which is not limited herein. When the server 105 is hardware, it may be implemented as a distributed server cluster composed of a plurality of servers, or as a single server; when the server is software, it may also be implemented as a single/multiple software/functional modules, which is not limited herein.

The above purposes may be achieved by applications installed on the terminal devices 101, 102, 103 and server 105, such as weather alert text processing applications (which may be further divided into client part and server part). In addition, in order to ensure the continuous and stable operating of a weather alert text processing operation as much as possible, other applications may also be installed on the terminal devices 101, 102, 103 and the server 105, such as fault diagnosis applications, communication applications used to communicate with management or operation and maintenance personnel, and so on.

Taking a weather alert text processing application that provides weather alert text processing services as an example, the server 105 with the application installed may achieve the following effects when running the application. Firstly, a to-be-processed weather alert text is acquired from the terminal devices 101, 102, 103 through the network 104; then, actual weather alert elements are extracted from the to-be-processed weather alert text using a preset element matching template, the element matching template being obtained by clustering from contexts of sample weather alert elements; next normalization processing is performed on the actual weather alert elements; and finally the obtained normalized alert elements are combined in a preset order to obtain a key weather alert text.

Further, the server 105 may also push the generated key weather alert text to corresponding users, and promptly remind the corresponding users to take precautionary measures in advance.

It should be noted that the to-be-processed weather alert text may be acquired in real time from the terminal devices 101, 102, 103 through the network 104, and may also be obtained from other websites that record identical or similar text information by crawling, for example, may be obtained on the official websites of the National Meteorological Administration and local meteorological bureaus. In addition to real-time acquisition, a previously acquired to-be-processed weather alert text may also be pre-stored locally in the server 105 in various ways, so that when the server 105 detects that such data has been stored locally, it may choose to perform subsequent processing steps based on the data stored locally. In this case, the exemplary system architecture 100 may not include the terminal devices 101, 102, 103 and the network 104.

The method for processing a weather alert text provided in the subsequent embodiments of the present disclosure is generally executed by the server 105 (that is, a device that stores important parameters such as element matching templates, normalization rules, a combination order) that is enabled to process this type of data. Correspondingly, the apparatus for processing a weather alert text is generally provided in the server 105. But meanwhile, it should also be noted that if some specific terminal devices have processing capabilities and computing resources that meet the requirements, these specific terminal devices may also be used to complete the above calculations that are originally assigned to the server 105, and then output the same result as the server 105. Correspondingly, the apparatus for processing a weather alert text may also be provided in the terminal devices 101, 102, 103. In this case, the exemplary system architecture 100 may not include the server 105 and the network 104.

It should be appreciated that the number of the terminal devices, the network and the server in Fig. 1 is merely illustrative. Any number of terminal devices, networks and servers may be provided according to actual requirements.

With reference to Fig. 2, Fig. 2 is a flowchart of a method for processing a weather alert text provided by an embodiment of the present disclosure, where a flow 200 includes the following steps.

Step 201: acquiring a to-be-processed weather alert text.

This step is intended to acquire the to-be-processed weather alert text by an executing body of the method for processing a weather alert text (for example, the server 105 as shown in Fig. 1).

The to-be-processed weather alert may be received in real time from a terminal device (for example, the terminal devices 101, 102, 103 as shown in Fig. 1). The terminal device may be a weather alert issuing device of a certain meteorological bureau or an information issuing interface.

In some cases, it may be unlikely to directly acquire the to-be-processed weather alert, but pictures or charts containing corresponding information may be acquired. In this case, the corresponding to-be-processed weather alert text may be extracted using technologies such as optical character recognition or structured information extraction.

Step 202: extracting actual weather alert elements from the to-be-processed weather alert text using preset element matching templates.

On the basis of step 201, this step is intended to extract the actual weather alert elements of various types included in the to-be-processed weather alert text by the executing body using the preset element matching templates. In the present disclosure, it is required to extract at least six types of actual weather alert elements: "issuing organization", "issuing time", "alert category", "alert level", "alert time limit" and "alert area". Examples thereof may be "Beijing Meteorological bureau", "Issued at 12:15", "Rainstorm alert", "Orange", "Last from 16:00 today to 19:00 today", "Covering most of the urban areas of Haidian District and Dongcheng District".

The element matching template is obtained from context information of sample weather alert elements through clustering. The sample weather alert elements are extracted from sample weather alert information. The context information means that objects to be clustered not only include various types of sample weather alert elements, but also include relevant context information of the sample weather alert elements, so as to obtain more accurate cluster centers through the clustering with the increased contextual information, and then generate a more accurate element matching template.

Step 203: performing normalization processing on the actual weather alert elements, and combining obtained normalized alert elements in a preset order to obtain a key weather alert text.

On the basis of step 202, this step is intended to uniformly express the extracted actual weather alert elements by the executing body through normalization processing, and then combine the actual weather alert elements with a unified expression in a certain order, and finally obtain the key weather alert text containing only key information and with the unified expression.

In the normalization processing for unifying expression, based on different types of weather alert elements, different normalization methods may be used. For example, an identical preset time format may be used for "issuing time" and "alert time limit" that include time, and for "issuing organization" and "alert area" that include a location, they should be replaced with officially recognized names, etc. Of course, it may also be considered that "issuing time" is often a moment, and "alert time limit" is often a time period, and a corresponding preset moment format and a time-period format may also be used respectively, which is not limited herein.

In the method for processing a weather alert text provided by the embodiments of the present disclosure, the element matching template as used is obtained by clustering the element contexts extracted from the sample weather alert elements in advance. Each type of weather alert element may correspond to a corresponding element matching template, and using the element context as input data for clustering to combine the context as much as possible improves the accuracy of the cluster centers. With clustering applied, generalization of the element matching template generated based on the cluster centers is improved, so that for various to-be-processed weather alert texts, accurate weather alert elements can be better extracted.

Further, after obtaining the key weather alert text, compared to the to-be-processed weather alert text, with an expression more concise, less likely to render ambiguity, and convenient for users to pick up key information faster, the key weather alert text may also be pushed timely to all users who may appear in an actual alert area. Specifically, the executing body may determine an information push area based on an alert area element included in the key weather alert text, and then push the key weather alert text to users in the information push area through a preset path. Furthermore, since the issuing time of weather alert information is often earlier than the alert time limit, a push range may be accurately determined by combining with the alert time limit and pushed to all users who may appear in the actual alert area within the actual alert time limit. For example, in a case that authorization is obtained, it may be determined whether a user may newly enter or leave the actual alert area within the actual alert time limit by reading the user's preset travel plan or a currently-made travel plan.

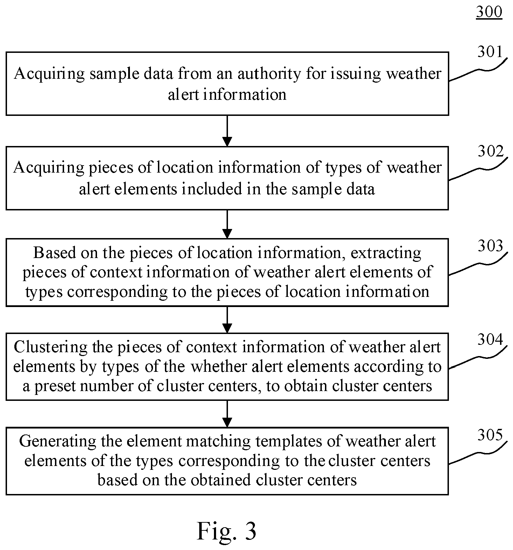

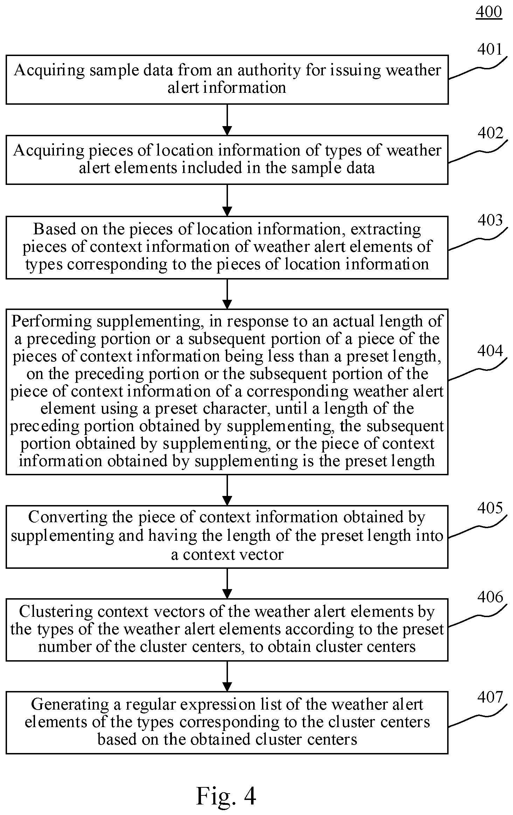

On the basis of the above embodiment, in order to deepen as much as possible the knowledge and understanding of how to obtain the element matching template in the present disclosure, the present disclosure also provides the flowcharts of two different methods for generating an element matching template through Fig. 3 and Fig. 4 respectively.

A flow 300 shown in the flowchart shown in Fig. 3 includes the following steps.

Step 301: acquiring sample data from an authority for issuing weather alert information.

This step is intended to acquire sample weather alert data used to obtain cluster centers in advance by the executing body. In order to ensure the accuracy of results, the sample weather alert data is acquired from an authority for issuing in weather alert information, such as the National Meteorological Administration, local meteorological bureaus, and so on.

Similarly, if it is not unlikely to directly acquire the sample data in a text form, a corresponding conversion operation may also be adopted based on the acquired format (such as a picture, a table, and a chart), so that the sample data in a unified format of text is finally obtained.

Step 302: acquiring pieces of location information of types of weather alert elements included in the sample data.

On the basis of step 301, this step is intended to acquire the pieces of location information of types of weather alert elements included in the sample data by the executing body. The location information may be starting and ending positions of an actual weather alert element in the sample data, or may be an overlaying highlight mark, etc. The pieces of location information of the weather alert elements in the sample data is usually obtained by labeling through experienced technicians, to ensure the accuracy of the element matching template obtained by clustering as much as possible.

Step 303: based on the pieces of location information, extracting pieces of context information of weather alert elements of types corresponding to the pieces of location information.

On the basis of step 302, this step is intended to extract pieces of context information of weather alert elements of types corresponding to the pieces of location information by the executing body based on the pieces of location information, that is, to extract more pieces of context forwardly and backwardly based on the pieces of location information of the weather alert element.

Step 304: clustering the pieces of context information of weather alert elements by types of the whether alert elements according to a preset number of cluster centers, to obtain cluster centers.

On the basis of step 303, this step is intended to cluster the pieces of context information of weather alert elements of a given type according to a preset number for cluster centers by the executing body to obtain the cluster centers. The number for the cluster centers may be set according to actual needs. If the volume of sample data is large enough and computing power is sufficient, in order to be as accurate as possible, the number for the cluster centers may be set to be a large number, to obtain each cluster center with a high discrimination degree.

Step 305: generating the element matching templates of weather alert elements of the types corresponding to the cluster centers based on the obtained cluster centers.

On the basis of step 304, this step is intended to generate the element matching templates of weather alert elements of the types corresponding to the cluster centers based on obtained cluster centers by the executing body.

That is, each type of weather alert element corresponds to a plurality of cluster centers, and an element matching template may be generated based on each cluster center. Finally, a plurality of element matching templates corresponding to each type of weather alert element may be obtained.

When the element matching template is actually used to extract a corresponding actual weather alert element from the to-be-processed weather alert text, matching a template parallelly or serially may be tried. A specific method may be flexibly selected according to actual situations.

A flow 400 shown in the flowchart shown in Fig. 4 includes the following steps:

Step 401: acquiring sample data from an authority for issuing weather alert information;

Step 402: acquiring pieces of location information of types of weather alert elements included in the sample data;

Step 403: based on the pieces of location information, extracting pieces of context information of weather alert elements of types corresponding to the pieces of location information;

Step 404: performing supplementing, in response to an actual length of a preceding portion or a subsequent portion of a piece of the pieces of context information being less than a preset length, on the preceding portion or the subsequent portion of the piece of context information of a corresponding weather alert element using a preset character, until a length of the preceding portion obtained by supplementing, the subsequent portion obtained by supplementing , or the piece of context information obtained by supplementing is the preset length.

Different from the flow 300 in Fig. 3, in the present embodiment, it also considers that,for some weather alert elements located at the starting or ending of the sample data, the preceding portion, the subsequent portion, of the context information, or the context information with a sufficient length may not be extracted. Therefore, for the context information with an actual length less than the preset length, the preset characte is used for supplementing, until the supplemented length of the preceding portion, the subsequent portion, or the preceding portion and the subsequent portion is the preset length. For example, each weather alert element may be required to have the preceding portion and the subsequent portion each with 20 characters, with a total length of 40 characters.

It should be understood that a unified length facilitates to eliminate a difference between different subsequent processing results as much as possible.

Step 405: converting the piece of context information obtained by supplementing and having the length of the preset length into a context vector.

On the basis of step 404, in this step, the piece of context information in the text form is converted into a vector form that is more convenient for clustering, so as to improve an efficiency of subsequent processing.

It should be understood that form conversion should not lead to a loss of information content, and other forms that facilitate clustering may also be used instead.

Step 406: clustering context vectors of the weather alert elements by the types of the weather alert elements according to the preset number of the cluster centers, to obtain cluster centers.

Step 407: generating a regular expression list of the weather alert elements of the types corresponding to the cluster centers based on the obtained cluster centers.

In this step, the regular expression is selected as the element matching template, and regular expressions generated respectively by different cluster centers of weather alert elements of types corresponding to the cluster centers are recorded in the regular expression list.

Compared with the embodiment shown in Fig. 3, in the embodiment shown in Fig. 4, it further considers whether the lengths of the context information of different weather alert elements are unified and how to unify the lengths. Furthermore, in order to improve the processing efficiency, the context information in the text form is converted into a vector form, and finally the regular expression with a wider application range and being more convenient for editing is selected as the element matching template.

On the basis of any of the foregoing embodiments, in the present disclosure, it also considers how to use the generated key weather alert text more effectively to maximize a value of data. For example, it is possible to find some potential laws from a statistical level based on a correlation between the weather alert elements in the key weather alert text that only includes key information, and then use the laws for prediction, etc. The laws may also be simply used for annual statistics and so on. A processing method includes but is not limited to: obtaining, based on key weather alert texts issued within a preset time period, an actual number of preset target weather alert elements or target weather alert element combinations by statistics; and generating a statistical and prediction result based on the actual number.

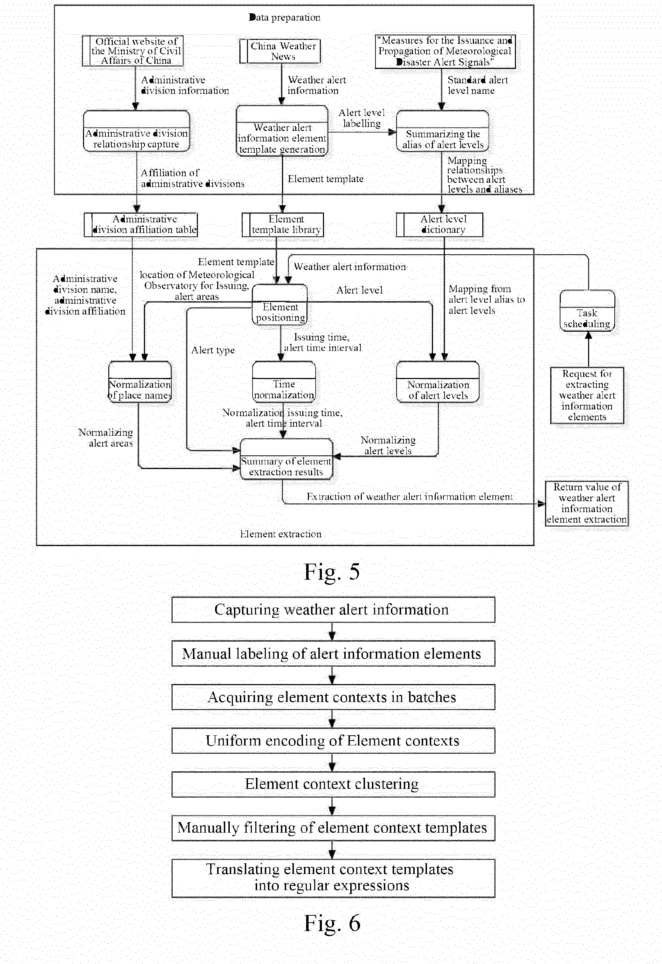

In order to deepen understanding, in the present disclosure, an application scenario is also combined to give an implementation scheme. Reference may be made to a schematic diagram of an overall flow as shown in Fig. 5.

As shown in Fig. 5, a main element extraction task performed by the weather alert information processing system may be divided into using element (matching) templates to position each weather alert element in a to-be-processed weather alert text and normalizing the weather alert elements extracted from the positioning. Normalization is mainly done through rules, dictionary constructing and text similarity calculation.

The following is a detailed description of the above two operations.

### 1. Positioning each weather alert element in a to-be-processed weather alert text

### 1.1 Generating an element (matching) template

In order to obtain context templates of each element of weather alert information in different formats, the following preparations need to be done (referring to the flowchart as shown in Fig. 6):
1) Using a web crawling program to continuously capture, each day, weather alert information in a provincial-level, a municipal-level, and a county-level from a webpage containing alert lists of China Weather, until the captured weather alert information covers most of the weather alert information formats;
2) Manually labeling the collected weather alert texts, and labeling positions of the 6 types of weather alert elements in the collected sample weather alert texts;
3) For each weather alert element, acquiring context thereof in the sample weather alert texts in batches (from preceding 20 characters of the element to subsequent 20 characters of the element);
4) Performing supplementing the context of the same type of weather alert element (using default characters to fill the preceding portion and the subsequent portion to obtain a 20-character preceding portion and a 20-character subsequent portion) and performing character-level one-hot encoding (converting the context of each type of element into 40(obtained by 20+20)-character integer-character ID);
5) Using the 40-character ID to compose a feature vector of each piece of context, applying a k-means clustering algorithm to cluster pieces of context of each type of weather alert element, and setting a large number for cluster centers n, such as n=100;
6) Manually evaluating and filtering the contexts of the weather alert elements corresponding to all cluster centers respectively after the clustering, and using the filtered contexts of the weather alert elements as the element (matching) templates;
7) Translating all types of weather alert element (matching) templates into regular expressions, and storing a (matching) template list (regular expression list) of each type of weather alert element in an element (matching) template file.

### 1.2 Execution of element positioning

For each type of weather alert element, all the regular expressions in a corresponding element (matching) template list of the type of weather alert element are used to perform a matching test sequentially on a weather alert text for testing. If a template is matched successfully, the element positioning is completed. If no template is matched successfully, the element positioning fails.

### 2. Normalizing the weather alert elements extracted from the positioning

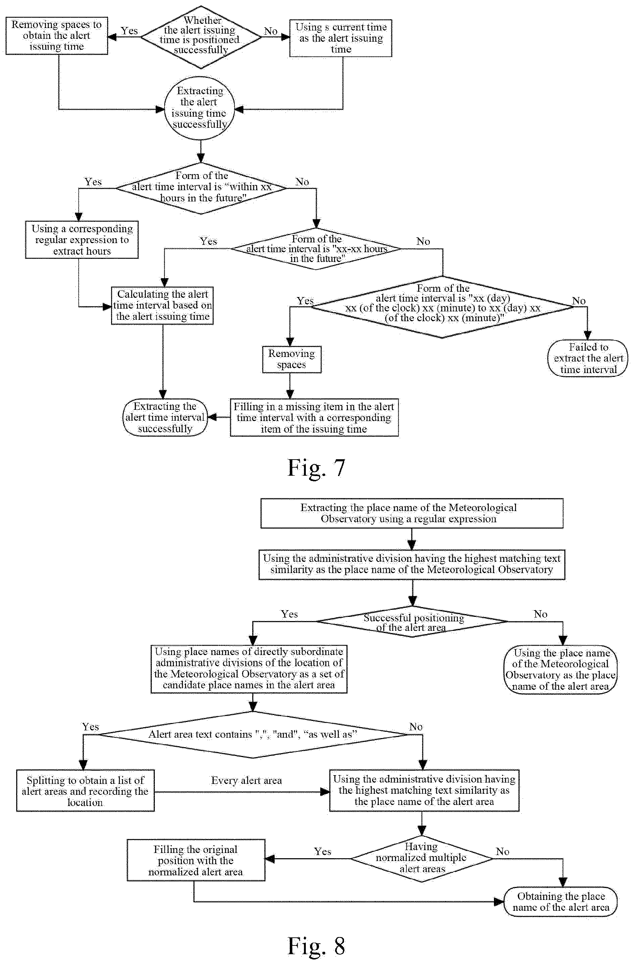

### 2.1 Time normalization (referring to the flowchart as shown in Fig. 7 at this time)

Time involved in the weather alert information includes the issuing time and the alert time limit (valid time interval):
1) The format of the alert issuing time is unified, always in a format of xxxx(year)xx(month)xx(day)xx(of the clock)xx(minute), such as 2020(year)10(month)26(day)14(of the clock)25(minute). It is only required to remove symbols in the issuing time string to complete the normalization of the alert issuing time. If the alert issuing time is not positioned, a current time is used as the alert issuing time;
2) There are 3 types of expressions for the alert valid time interval: "within xx hours in the future", "xxxx hours in the future" and "xx(day)xx(of the clock)xx(minute)to xx(day)xx(of the clock)xx(minute)". The corresponding regular expressions are separately written to extract a time interval or incomplete absolute time relative to the alert issuing time. By referring to the normalized alert issuing time, a complete form of the alert valid time interval may be determined, for example, from 2020(year)9(month)30(day)22(of the clock)30(minute)to 2020(year)10(month)1(day)2(of the clock)30 (minute).

### 2.2 Normalization of alert types

In the weather alert information issued by various meteorological observatories, the alert types (such as typhoon, rainstorm, and snowstorm) are accurate and unambiguous, and no normalization is required.

### 2.3 Normalization of alert levels

According to the "Measures for the Issuance and Dissemination of Meteorological Disaster Warning Signals" and the aliases of alert levels summarized from the collected weather alert information, a weather alert level dictionary is constructed with the alert level as a unit. Entries in the alert level dictionary are mappings from specific texts to standard expressions of alert levels respectively, such as "General Alert" -> "Blue Alert", "Level IV Alert" -> "Blue Alert", "Level 4 Alert" -> "Blue Alert", "Blue Alert" -> "Blue Alert". By means of the alert level dictionary, the normalization of alert information levels may be quickly completed.

### 2.4 Normalization of place names

As a preparation for the normalization of place names, a tree relationship, codes and names of administrative divisions above the county level are captured from the official website of the Ministry of Civil Affairs of China, to establish an administrative division attribution table. For an administrative division in each administrative division record, a name, an administrative division level (province, city, county, etc.), and codes of all administrative divisions directly under the jurisdiction thereof are recorded.

Performing the following steps to normalize the place names of the alert information (referring to the flowchart as shown in Fig. 8 at this time):
1) Using a regular expression to extract the place name of the location of a meteorological department that issues the alert information, and recording the same as name_public.
2) Traversing province-level and municipal-level administrative division records, recording the current administrative division name as name_i, calculating an edit distance edit_diff between name_public and name_i, and then calculating a text similarity sim_i=edit_diff/len(name_public) between the two names. The administrative division having the highest text similarity sim_i is used as the administrative division of the location the meteorological department that issues the alert information.
3) Querying names of all directly subordinate administrative divisions of the location of the meteorological department that issues the alert information in the administrative division attribution table, as candidate normalization results of the "alert area" element; using the name of the administrative division of the location of the meteorological department that issues the alert information as a default normalization result of the "alert area" element.
4) If the positioning of the "alert area" element fails, the location of the meteorological department that issues the alert information is used as the alert area.
5) If the text for the element does not contain ",", "and", "as well as" or other delimiters for a list element when positioning the "alert area", the following operations are performed: recording the element text as name_raw, traversing the candidate normalization results, recording a current normalization result as name_j, calculating an edit distance edit_diff between name_raw and name_j, and then calculating a text similarity sim_j=edit_diff/len(name_raw) between the two names. The name of the administrative division having the highest text similarity sim_j is used as the normalization result of the alert area.
6) If the element text contains ",", "and", "as well as" or other delimiters for a list element when positioning the "alert area", the following operations are performed: extracting a place-name list from the element text according to the delimiters, and performing 5) for each place name in the list to normalize; replacing place name normalization results back into the element text according to positions respectively, and using the replaced element text as the normalization result of the alert area.

Further, at the end of the above operations, the normalized weather alert elements may be output, and these weather alert elements may be combined in a certain order later, and the key weather alert text obtained may be pushed to the corresponding users.

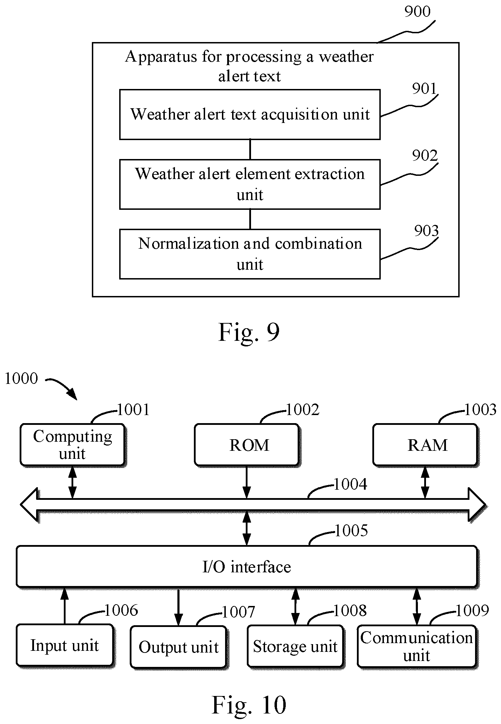

With further reference to Fig. 9, as an implementation of the method shown in the above figures, the present disclosure provides an embodiment of an apparatus for processing a weather alert text. The apparatus embodiment corresponds to the method embodiment as shown in Fig. 9. The apparatus may be applied to various electronic devices.

As shown in Fig. 9, an apparatus 900 for processing a weather alert text of the present embodiment may include: a weather alert text acquisition unit 901, a weather alert element extraction unit 902, a normalization and combination unit 903. The weather alert text acquisition unit 901 is configured to acquire a to-be-processed weather alert text. The weather alert element extraction unit 902 is configured to extract actual weather alert elements from the to-be-processed weather alert text using preset element matching templates, the element matching templates being obtained by clustering from contexts of sample weather alert elements. The normalization and combination unit 903 is configured to perform normalization processing on the actual weather alert elements, and combine obtained normalized alert elements in a preset order to obtain a key weather alert text.

In the present embodiment, in the apparatus 900 for processing a weather alert text: for the specific processing and the technical effects of the weather alert text acquisition unit 901, the weather alert element extraction unit 902, the normalization and combination unit 903, reference may be made to the relevant description of steps 201-203 in the embodiment corresponding to Fig. 2 respectively, and detailed description thereof will be omitted.

In some alternative implementations of the present embodiment, the apparatus 900 for processing a weather alert text may further include:
an information push area determination unit, configured to determine an information push area based on an alert area element included in the key weather alert text; and
an alert information pushing unit, configured to push the key weather alert text to users in the information push area through a preset path.

In some alternative implementations of the present embodiment, the apparatus 900 for processing a weather alert text may further include an element matching template generation unit, and the element matching template generation unit may include:
a sample data acquisition subunit, configured to acquire sample data from an authority for issuing weather alert information;
an element location information acquisition subunit, configured to acquire location information each type of weather alert element included in the sample data;
a context information extraction subunit, configured to, based on the pieces of location information, extract pieces of context information of weather alert elements of types corresponding to the pieces of location information; and
a clustering and element matching template generation subunit, configured to cluster the pieces of context information of weather alert elements by types of the whether alert elements according to a preset number of cluster centers, and generat the element matching templates of weather alert elements of the types corresponding to the cluster centers based on obtained cluster centers.

In some alternative implementations of the present embodiment, the element matching template generation unit may further include:
a supplementing subunit, configured to perform supplementing, in response to an actual length of a preceding portion or a subsequent portion of a piece of the pieces of context information being less than a preset length, on the preceding portion or the subsequent portion of the piece of context information of a corresponding weather alert element using a preset character, until a length of the preceding portion obtained by supplementing, the subsequent portion obtained by supplementing, or the piece of context information obtained by supplementing is the preset length;
an expression conversion subunit, configured to convert the context the piece of context information obtained by supplementing and having the length of the preset length into a context vector; and
the clustering and element matching template generation subunit includes a clustering module configured to cluster the pieces of context information of the weather alert elements by the types of the weather alert elements according to the preset number of cluster centers, and the clustering module is further configured to:
cluster context vectors of the weather alert elements by the types of the weather alert elements according to the preset number of the cluster centers.

In some alternative implementations of the present embodiment, the clustering and element matching template generation subunit includes an element matching template generation module configured to generate the element matching templates of the weather alert elements of the types corresponding to the cluster centers based on the obtained cluster centers, and the element matching template generation module may be further configured to:
generate a regular expression list of the weather alert elements of the types corresponding to the cluster centers based on the obtained cluster centers, wherein regular expressions generated respectively by different cluster centers of weather alert elements of types corresponding to the cluster centers are recorded in the regular expression list.

In some alternative implementations of the present embodiment, the apparatus 900 for processing a weather alert text may further include:
a target element occurrence statistic unit, configured to obtain, based on key weather alert texts issued within a preset time period, an actual number of preset target weather alert elements or an actual number of preset combinations of target weather alert elements by statistics; and
a statistic and prediction result generation unit, configured to generate a statistical and prediction result based on the actual number.

The present embodiment exists as an apparatus embodiment corresponding to the above method embodiment. The element matching template used by the apparatus for processing a weather alert text provided in the present embodiment is obtained by clustering the element contexts extracted from the sample weather alert elements in advance. Each type of weather alert element may correspond to a corresponding element matching template, and using the element contexts as input data for clustering to combine the contexts as much as possible improves the accuracy of the cluster centers. The application of clustering improves the generalization of the element matching template generated based on the cluster centers, so that various to-be-processed weather alert texts can be better extracted to obtain accurate weather alert elements.

According to an embodiment of the present disclosure, the present disclosure also provides an electronic device, a readable storage medium, and a computer program product.

Fig. 10 shows a schematic block diagram of an example electronic device 1000 that may be used to implement embodiments of the present disclosure. The electronic device is intended to represent various forms of digital computers, such as laptop computers, desktop computers, workbenches, personal digital assistants, servers, blade servers, mainframe computers, and other suitable computers. The electronic device may also represent various forms of mobile apparatuses, such as personal digital processing, cellular phones, smart phones, wearable devices, and other similar computing apparatuses. The components shown herein, their connections and relationships, and their functions are merely examples, and are not intended to limit the implementation of the present disclosure described and/or claimed herein.

As shown in Fig. 10, the device 1000 may include a computing unit 1001, which may execute various appropriate actions and processes in accordance with a program stored in a read-only memory (ROM) 1002 or a program loaded into a random access memory (RAM) 1003 from a storage apparatus 1008. The RAM 1003 also stores various programs and data required by operations of the device 1000. The computing unit 1001, the ROM 1002 and the RAM 1003 are connected to each other through a bus 1004. An input/output (I/O) interface 1005 is also connected to the bus 1004.

Multiple components in the device 1000 are connected to the I/O interface 1005, including: an input unit 1006 including a touch screen, a touchpad, a keyboard, a mouse and the like; an output unit 1007, such as various types of displays, a speaker, and the like; a storage unit 1008 including a magnetic tap, a hard disk and the like; and a communication unit 1009. The communication unit 1009 may allow the electronic device 1000 to perform wireless or wired communication with other devices to exchange data.

The computing unit 1001 may be various general-purpose and/or dedicated processing components having processing and computing capabilities. Some examples of the computing unit 1001 include, but are not limited to, central processing unit (CPU), graphics processing unit (GPU), various dedicated artificial intelligence (AI) computing chips, various computing units running machine learning model algorithms, digital signal processor (DSP), and any appropriate processors, controllers, microcontrollers, etc. The computing unit 1001 performs the various methods and processes described above, such as the method for configuring a color. For example, in some embodiments, the method for configuring a color may be implemented as a computer software program, which is tangibly included in a machine readable medium, such as the storage unit 1008. In some embodiments, part or all of the computer program may be loaded and/or installed on the device 1000 via the ROM 1002 and/or the communication unit 1009. When the computer program is loaded into the RAM 1003 and executed by the computing unit 1001, one or more steps of the method for configuring a color described above may be performed. Alternatively, in other embodiments, the computing unit 1001 may be configured to perform the method for configuring a color by any other appropriate means (for example, by means of firmware).

Various embodiments of the systems and technologies described in this article may be implemented in digital electronic circuit systems, integrated circuit systems, field programmable gate arrays (FPGA), application specific integrated circuits (ASIC), application-specific standard products (ASSP), system-on-chip (SOC), complex programmable logic device (CPLD), computer hardware, firmware, software, and/or their combinations. These various embodiments may include: being implemented in one or more computer programs, the one or more computer programs may be executed and/or interpreted on a programmable system including at least one programmable processor, the programmable processor may be a dedicated or general-purpose programmable processor that may receive data and instructions from a storage system, at least one input apparatus, and at least one output apparatus, and transmit the data and instructions to the storage system, the at least one input apparatus, and the at least one output apparatus.

Program codes for implementing the method of the present disclosure may be written in any combination of one or more programming languages. These program codes may be provided to a processor or controller of a general purpose computer, special purpose computer or other programmable data processing apparatus such that the program codes, when executed by the processor or controller, enables the functions/operations specified in the flowcharts and/or block diagrams being implemented. The program codes may execute entirely on the machine, partly on the machine, as a stand-alone software package partly on the machine and partly on the remote machine, or entirely on the remote machine or server.

In the context of the present disclosure, the machine readable medium may be a tangible medium that may contain or store programs for use by or in connection with an instruction execution system, apparatus, or device. The machine readable medium may be a machine readable signal medium or a machine readable storage medium. The machine readable medium may include, but is not limited to, an electronic, magnetic, optical, electromagnetic, infrared, or semiconductor system, apparatus, or device, or any suitable combination of the foregoing. More specific examples of the machine readable storage medium may include an electrical connection based on one or more wires, portable computer disk, hard disk, random access memory (RAM), read only memory (ROM), erasable programmable read only memory (EPROM or flash memory), optical fiber, portable compact disk read only memory (CD-ROM), optical storage device, magnetic storage device, or any suitable combination of the foregoing.

In order to provide interaction with a user, the systems and technologies described herein may be implemented on a computer, the computer has: a display apparatus (e.g., CRT (cathode ray tube) or LCD (liquid crystal display) monitor for displaying information to the user; and a keyboard and a pointing apparatus (for example, a mouse or trackball), the user may use the keyboard and the pointing apparatus to provide input to the computer. Other kinds of apparatuses may also be used to provide interaction with the user; for example, the feedback provided to the user may be any form of sensory feedback (for example, visual feedback, auditory feedback, or tactile feedback); and may use any form (including acoustic input, voice input, or tactile input) to receive input from the user.

The systems and technologies described herein may be implemented in a computing system (e.g., as a data server) that includes back-end components, or a computing system (e.g., an application server) that includes middleware components, or a computing system (for example, a user computer with a graphical user interface or a web browser, through which the user may interact with the embodiments of the systems and technologies described herein) that includes front-end components, or a computing system that includes any combination of such back-end components, middleware components, or front-end components. The components of the system may be interconnected by any form or medium of digital data communication (e.g., a communication network). Examples of the communication network include: local area network (LAN), wide area network (WAN), and Internet.

The computer system may include a client and a server. The client and the server are generally far from each other and usually interact through a communication network. The client and server relationship is generated by computer programs operating on the corresponding computer and having client-server relationship with each other. The server can be a cloud server, a server for a distributed system, or a server combined with blockchain.

The element matching templates used in the technical solution provided in the present embodiment are obtained by clustering the element contexts extracted from the sample weather alert elements in advance. Each type of weather alert element may correspond to a corresponding element matching template, and using the element contexts as input data for clustering to combine the contexts as much as possible improves the accuracy of the cluster centers. The application of clustering improves the generalization of the element matching templates generated based on the cluster centers, so that various to-be-processed weather alert texts can be better extracted to obtain accurate weather alert elements.

It should be understood that various forms of processes shown above may be used to reorder, add, or delete steps. For example, the steps described in the present disclosure may be performed in parallel, sequentially, or in different orders, as long as the desired results of the technical solution disclosed in embodiments of the present disclosure can be achieved, no limitation is made herein.

The above specific embodiments do not constitute a limitation on the protection scope of the present disclosure. Those skilled in the art should understand that various modifications, combinations, sub-combinations and substitutions can be made according to design requirements and other factors. Any modification, equivalent replacement and improvement made within the spirit and principle of the present disclosure shall be included in the protection scope of the present disclosure.

## Claims

1. A method for processing a weather alert text, the method comprising:
acquiring a to-be-processed weather alert text;
extracting actual weather alert elements from the to-be-processed weather alert text using preset element matching templates, the element matching templates being obtained by clustering from contexts of sample weather alert elements; and
performing normalization processing on the actual weather alert elements, and combining obtained normalized alert elements in a preset order to obtain a key weather alert text.

2. The method according to claim 1, further comprising:
determining an information push area based on an alert area element included in the key weather alert text; and
pushing the key weather alert text to a user in the information push area through a preset path.

3. The method according to claim 1, wherein a process of generating an element matching template comprises:
acquiring sample data from an authority for issuing weather alert information;
acquiring pieces of location information of types of weather alert elements included in the sample data;
based on the pieces of location information, extracting pieces of context information of weather alert elements of types corresponding to the pieces of location information; and
clustering the pieces of context information of weather alert elements by types of the whether alert elements according to a preset number of cluster centers, and generating the element matching templates of weather alert elements of the types corresponding to the cluster centers based on obtained cluster centers.

4. The method according to claim 3, further comprising:
performing supplementing, in response to an actual length of a preceding portion or a subsequent portion of a piece of the pieces of context information being less than a preset length, on the preceding portion or the subsequent portion of the piece of context information of a corresponding weather alert element using a preset character, until a length of the preceding portion obtained by supplementing, the subsequent portion obtained by supplementing , or the piece of context information obtained by supplementing is the preset length;
converting the piece of context information obtained by supplementing and having the length of the preset length into a context vector; and
clustering the pieces of context information of the weather alert elements by the types of the weather alert elements according to the preset number of cluster centers, comprises:
clustering context vectors of the weather alert elements by the types of the weather alert elements according to the preset number of the cluster centers.

5. The method according to claim 3, wherein generating the element matching templates of the weather alert elements of the types corresponding to the cluster centers based on the obtained cluster centers, comprises:
generating a regular expression list of the weather alert elements of the types corresponding to the cluster centers based on the obtained cluster centers, wherein regular expressions generated respectively by different cluster centers of weather alert elements of types corresponding to the cluster centers are recorded in the regular expression list.

6. The method according to any one of claims 1-5, further comprising:
obtaining, based on key weather alert texts issued within a preset time period, an actual number of preset target weather alert elements or an actual number of preset combinations of target weather alert elements by statistics; and
generating a statistical and prediction result based on the actual number.

7. An apparatus for processing a weather alert text, the apparatus comprising:
a weather alert text acquisition unit, configured to acquire a to-be-processed weather alert text;
a weather alert element extraction unit, configured to extract actual weather alert elements from the to-be-processed weather alert text using preset element matching templates, the element matching templates being obtained by clustering from contexts of a sample weather alert elements; and
a normalization and combination unit, configured to perform normalization processing on the actual weather alert elements, and combine obtained normalized alert elements in a preset order to obtain a key weather alert text.

8. The apparatus according to claim 7, further comprising:
an information push area determination unit, configured to determine an information push area based on an alert area element included in the key weather alert text; and
an alert information pushing unit, configured to push the key weather alert text to a user in the information push area through a preset path.

9. The apparatus according to claim 7, further comprising an element matching template generation unit, and the element matching template generation unit comprises:
a sample data acquisition subunit, configured to acquire sample data from an authority for issuing weather alert information;
an element location information acquisition subunit, configured to acquire pieces of location information of types of weather alert elements included in the sample data;
a context information extraction subunit, configured to, based on the pieces of location information, extract pieces of context information of weather alert elements of types corresponding to the pieces of location information; and
a clustering and element matching template generation subunit, configured to cluster the pieces of context information of weather alert elements by types of the whether alert elements according to a preset number of cluster centers, and generate the element matching templates of weather alert elements of the types corresponding to the cluster centers based on obtained cluster centers.

10. The apparatus according to claim 9, wherein the element matching template generation unit further comprises:
a supplementing subunit, configured to perform supplementing, in response to an actual length of a preceding portion or a subsequent portion of a piece of the pieces of context information being less than a preset length, on the preceding portion or the subsequent portion of the piece of context information of a corresponding weather alert element using a preset character, until a length of the preceding portion obtained by supplementing, the subsequent portion obtained by supplementing, or the piece of context information obtained by supplementing is the preset length;
an expression conversion subunit, configured to convert the piece of context information obtained by supplementing and having the length of the preset length into a context vector; and
the clustering and element matching template generation subunit comprises a clustering module configured to cluster the pieces of context information of the weather alert elements by the types of the weather alert elements according to the preset number of cluster centers, and the clustering module is further configured to:
cluster context vectors of the weather alert elements by the types of the weather alert elements according to the preset number of the cluster centers.

11. The apparatus according to claim 9, wherein the clustering and element matching template generation subunit comprises an element matching template generation module configured to generate the element matching templates of the weather alert elements of the types corresponding to the cluster centers based on the obtained cluster centers, and the element matching template generation module is further configured to:
generate a regular expression list of the weather alert elements of the types corresponding to the cluster centers based on the obtained cluster centers, wherein regular expressions generated respectively by different cluster centers of weather alert elements of types corresponding to the cluster centers are recorded in the regular expression list.

12. The apparatus according to any one of claims 7-11, further comprising:
a target element occurrence statistic unit, configured to obtain, based on key weather alert texts issued within a preset time period, an actual number of preset target weather alert elements or an actual number of preset combinations of target weather alert elements by statistics; and
a statistic and prediction result generation unit, configured to generate a statistical and prediction result based on the actual number.

13. An electronic device, comprising:
at least one processor; and
a memory, communicatively connected to the at least one processor; wherein,
the memory, storing instructions executable by the at least one processor, the instructions, when executed by the at least one processor, cause the at least one processor to perform the method for processing a weather alert text according to any one of claims 1-6.

14. A non-transitory computer readable storage medium, storing computer instructions, the computer instructions, being used to cause the computer to perform the method for processing a weather alert text according to any one of claims 1-6.

15. A computer program product, comprising a computer program, the computer program, when executed by a processor, implements the method for processing a weather alert text according to any one of claims 1-6.
